(19) **Europäisches Patentamt**
**European Patent Office**
**Office européen des brevets**

(11) **EP 4 651 459 A1**

(12) **EUROPEAN PATENT APPLICATION**

(43) Date of publication:
**19.11.2025 Bulletin 2025/47**

(21) Application number: **25176363.7**

(22) Date of filing: **14.05.2025**

(51) International Patent Classification (IPC):
**H04L 45/00** *(2022.01)*

(52) Cooperative Patent Classification (CPC):
**H04L 45/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.05.2024 US 202463647876 P**

(71) Applicant: **Google LLC**
**Mountain View, CA 94043 (US)**

(72) Inventors:
• **SHARMA, Naveen Kumar**
**Mountain View, 94043 (US)**
• **WASSEL, Hassan Mohamed Gamal Hassan**
**Mountain View, 94043 (US)**
• **LIN, Jiaxin**
**Austin, 78731 (US)**
• **SINGHVI, Arjun**
**Mountain View, 94043 (US)**
• **SCHMIDT, Gerald**
**San Jose, 95120 (US)**
• **CHANDRA, Prashant**
**Mountain View, 94043 (US)**
• **DUKKIPATI, Nandita**
**Mountain View, 94043 (US)**
• **VENKATESAN, Ajay**
**Milpitas, 95035 (US)**
• **JUPUDI, Bala**
**Mountain View, 94043 (US)**
• **WANG, Weihuang**
**Los Gatos, 95032 (US)**

(74) Representative: **Betten & Resch**
**Patent- und Rechtsanwälte PartGmbB**
**Maximiliansplatz 14**
**80333 München (DE)**

(54) **RESOURCE ISOLATION IN A HARDWARE-ASSISTED TRANSPORT LAYER**

(57) Methods, systems, and apparatus, including computer-readable storage media for resource isolation between connections with shared hardware resources. A network device, such as a network interface card, is configured to determine dynamic resource limits for each connection, and backpressure each connection individually to avoid a global pause when the shared hardware resources are oversubscribed by the current connections. As a result, slower connections may be paused for exceeding resource limits, protecting faster connections from slowing down because resources are shared between both types of connections. Dynamic resource limits can be generated and updated not only per connection, but also based on subsets of the shared hardware resources assigned to different sources of data, as well assigned to different types of transactions communicated over a connection. A hardware-assisted transport layer can be configured to apply dynamic resource limits individually to different connections. from a variety of different upper-layer protocols (ULPs).

FIG. 2

**Description**

CROSS REFERENCE TO RELATED APPLICATIONS

The present application claims the benefit of the filing date of U.S. Provisional Patent Application No. 63/647,876, filed May 15, 2024, the disclosure of which is hereby incorporated herein by reference.

BACKGROUND

Data connections across a network communicate data packets from various different source devices to different destination devices. Communications over a network can be broken down into a network model of stacked layers, where each layer contributes to some aspect of the transmission of data to and/or from different devices of the network. A transport layer, for example, handles communication of data across the network. The transport layer can be implemented in hardware to enable or improve features for communicating data more efficiently. Data may be received from layers higher in the network model, implementing protocols referred to as upper-layer protocols (ULPs).

Multiple different connections can be established between different devices for communicating data through the transport layer. Because hardware resources, such as memory, bandwidth, or processing cycles, may be shared in communicating data, e.g., reading or writing data, along the different connections, slower performing or higher-latency connections may take away from available hardware resources that could be used for faster, lower-latency connections. For example, slower connections may exhibit head-of-line blocking, which ends up slowing down connections later in the queue that would otherwise communicate their payloads faster and more efficiently, but for the slowdown.

To prevent more serious issues from occurring, such as a system crash for lack of computing resources, the transport layer hardware can initiate a global pause, preventing new connections from being made and new data packets from being transmitted until computing resources free up. The disproportional hardware resource usage and corresponding threat of a global pause introduces performance unfairness between slower connections and faster connections impeded by the slower connections.

BRIEF SUMMARY

Aspects of the disclosure or disclosed technology are directed to resource isolation between connections with shared hardware resources that may potentially become oversubscribed. A network device, such as a network interface card (NIC), is configured to determine dynamic resource limits for each connection and backpressure each connection individually to avoid a global pause when the shared hardware resources are oversubscribed by the current connections. As a result, slower connections may be temporarily paused for exceeding resource limits, protecting faster connections from slowing down because resources are shared between both types of connections. Dynamic resource limits can be generated and updated not only per connection, but also based on subsets of the shared hardware resources assigned to different sources of data, as well as assigned to different types of transactions communicated over a connection. The resource limit factors in the amount of computing resources that are available and free for use from a global resource pool for sending or receiving data over connections, to determine whether resource limits should be raised or lowered in response to pressure on computing resources as a whole.

A hardware-assisted transport layer can be configured to apply dynamic resource limits individually to different connections from a variety of different upper-layer protocols (ULPs). Dynamic resource limits can also correspond to different upper-layer protocols (ULPs), such as a ULP for remote direct memory access (RDMA), which is used for transmitting at least some data over these connections. The NIC may issue signals over an interface managing a ULP and connections on the transport layer. The signals can cause outgoing transactions from a ULP to the transport layer to slow or cease altogether, shutting off one or more individual connections to avoid a global pause.

The disclosed technology may take the form of a method, apparatus, non-transitory media, or a system. For example, the disclosed technology may take the form of a method for resource isolation during data communication, the method comprising receiving, by one or more processors, a request to send data along a connection between a source and a destination; generating, by the one or more processors, a resource limit for the connection, the resource limit based at least partially on free resource space for computing resources allocated for sending data over a plurality of connections; sending, by the one or more processors, data over the connection between the source and the destination; and causing, by the one or more processors, the connection to pause based on a determination that the connection exceeds the resource limit.

In accordance with this aspect of the disclosed technology, the one or more processors are part of a transport layer at least partially implemented in hardware; the computing resources are accessible to the transport layer for generating the plurality of connections; and the computing resources are at least partially oversubscribed. Further in accordance with this aspect of the disclosed technology, the method comprises generating, by the one or more processors, an updated resource limit; and updating, by the one or more processors, the connection with the updated resource limit. Further still, the method may comprise maintaining a plurality of connections, including the connection, wherein the total resource free space is based at least partially on: a total allocation of the resources available for the plurality of connections, a predetermined headroom of reserved resources that are not allocated to the plurality of connections, and a total occupancy of the resources. In addition, the resources comprise at least one of: a buffer allocation in memory for receiving the request; a buffer allocation in memory for sending a response to the request; or a buffer allocation in memory for generating the connection.

Further in accordance with this aspect of the disclosed technology, the method may comprise generating, by the one or more processors, a plurality of resource limits, each resource limit corresponding to a respective type of data communication over the connection and a respective resource allocated to the respective type of data communication. Furthermore, generating the plurality of resource limits comprises generating each resource limit based on at least one of: a measurement of congestion of a network used by the connection to communicate data, or a measurement of congestion of a device implementing the one or more processors. Further still, generating the resource limit for the connection may comprise generating the resource limit based at least in part on an allocation of hardware for connections communicating data in accordance with a one or more upper-layer protocols (ULPs). In addition, the one or more upper-layer protocols comprise at least one of remote direct memory access (RDMA) or nonvolatile memory express (NVMe).

The disclosed technology may also take the form of a system comprising: a network device comprising one or more processors configured to: receive a request for a connection between a source and a destination; generate a resource limit for the connection, the resource limit based at least partially on free resource space for computing resources allocated for sending data over a plurality of connections; send data over the connection between the source and the destination; and determine that the connection exceeds the resource limit, and cause the connection to pause when the connection exceeds the resource limit.

In accordance with this aspect of the disclosed technology, the network device is part of a transport layer at least partially implemented in hardware; the computing resources are accessible to the transport layer for generating the plurality of connections; and the computing resources are at least partially oversubscribed. Furthermore, the one or more processors are further configured to: generate, by the one or more processors, an updated resource limit; and update, by the one or more processors, the connection with the updated limit. Further still, the network device can be a network interface card.

Additionally, the one or more processors can be further configured to maintain the plurality of connections, including the connection, wherein the total resource free space is based at least partially on: a total allocation of the resources available for the plurality of connections, a predetermined headroom of reserved resources that are not allocated to the plurality of connections, and a total occupancy of the resources. Furthermore, the resources may comprise at least one of: a buffer allocation in memory for receiving the request; a buffer allocation in memory for sending a response to the request; or a buffer allocation in memory for generating the connection.

Further in accordance with this aspect of the disclosed technology, the one or more processors are further configured to generate a plurality of resource limits, each resource limit corresponding to a respective type of data communication over the connection and a respective resource allocated to the respective type of data communication. Furthermore, in generating the plurality of resource limits, the one or more processors are configured to generate each resource limit based on at least one of: a measurement of congestion of a network used by the connection to communicate data, or a measurement of congestion of a device implementing the one or more processors. Further still, the one or more processors are further configured to generate a plurality of resource limits, each resource limit corresponding to a respective type of data communication over the connection and a respective resource allocated to the respective type of data communication.

In another aspect the disclosed technology may take the form of one or more transitory storage media storing instructions that when executed by a network device comprising one or more processors, cause the one or more processors to perform operations comprising: receiving a request for a connection between a source and a destination; sending data over the connection between the source and the destination; and determining that the connection exceeds the resource limit; and causing the connection to pause when the connection exceeds the resource limit. In accordance with this aspect of the disclosed technology, the one or more processors are part of a transport layer at least partially implemented in hardware; the computing resources are accessible to the transport layer for sending data over the plurality of connections; and the computing resources are at least partially oversubscribed.

BRIEF DESCRIPTION OF THE DRAWINGS

FIG. 1 is a block diagram of an example hardware-assisted transport layer implementing resource isolation across multiple upper layer protocols (ULPs), according to aspects of the disclosure.

FIG. 2 is a block diagram of an example network interface card (NIC), according to aspects of the disclosure.

FIG. 3 is a flow diagram of an example process for resource connection isolation based on a resource limit, according to aspects of the disclosure.

FIG. 4 is a block diagram of an example network implementing an example NIC, according to aspects of the disclosure.

FIG. 5 is a block diagram of an example computing environment for implementing resource isolation, according to aspects of the disclosure.

DETAILED DESCRIPTION

Overview

Aspects of the disclosure are directed to resource isolation between connections with shared hardware resources. Resource isolation refers to preventing or mitigating hardware resources of slower connections impacting the performance of faster connections. Violation of resource isolation can occur, for example, because hardware resources may be oversubscribed by multiple connections, meaning that multiple connections are allocated an amount of resources in excess of the total available resources. Hardware resources can include bandwidth, memory or buffer space, processing cycles, etc. A system implementing resource isolation generates dynamic resource limits and communicates commands to individually pause connections operating in excess of those resource limits. When a connection is paused, the source device is instructed to not send any additional outgoing transactions to a recipient, until receiving an indication or communication to resume. Resource isolation as described herein can mitigate or reduce slow down and disruption on a system configured to send and receive data over connections between devices competing for resources.

For example, a device may be the source of a faster connection attempting to send traffic at 10 Gbps. The same device may also be the source of fifteen other slower connections, each attempting to send data at 150 Gbps. Other examples include a device that is the destination of the connections, in which data is received and read. These fifteen connections may face incast or network congestion, simultaneously. This example pattern of connections causes hardware resources for transmitting the data that is oversubscribed to be taken up by the slower connections, not leaving enough resources for the faster connection. The faster connection latency increases, as a result.

The resource limit can be based in part on the total resource free space of the system sending data over connections between devices. A system of devices configured to send data received from applications over connections may take from a shared pool of hardware resources. By accounting for global resource usage in the form of total free space, a system implementing resource isolation as described herein can scale more effectively for larger quantities of connections. For example, without accounting for resource free space globally, incoming packets will always be scheduled without regard to available resources, resulting in those resources being exhausted, and prompting a global pause.

In addition, the resource limit can be computed based on current network metrics provided to a network device, such as a network interface card (NIC). The resource limit for a connection may be determined based at least in part on current metrics measuring the available buffer in memory for the connection, as well as the current congestion of the network fabric, measured for example using round-trip time (RTT) for transmitted packets. The resource limit can also account for headroom for each resource, which may in some examples be specific to the type of resource, the type of data, e.g., requests versus responses on the transmit or receive side of a communication, and/or data communication on a connection corresponding to a certain upper-layer protocol.

The resource limit can be computed by the network device, such as the NIC. The NIC can compute and update resource limits for individual connections. In some examples, the NIC computes dynamic limits for connections drawing from subsets of the total resource pool. For example, subsets may be defined for connections carrying certain types of data or data transactions, such as requests versus responses. The NIC can be configured to allocate subsets of resources to ensure that resources exist for each type of data transaction.

A hardware-assisted transport layer is an example type of system that can benefit from resource isolation with individual connection backpressure. A hardware-assisted transport layer is a transport layer implemented by a system at least partially in hardware, such that some operations, such as packet processing or transmission, load balancing, traffic shaping, and congestion control, are accelerated or made more efficient through hardware. Application-specific circuits (ASICs) can be configured to perform these and other potential operations implemented in network interface cards (NICs) or other components of the system communicating data over the network. Connections on a hardware-assisted transport layer may be generated in software, relying on pools of resources that are used by the connections to send or receive data to or from the destination.

A hardware-assisted transport layer may communicate with devices using one or more upper layer protocols (ULPs). These ULPs can be used to provide additional services to the network stack the transport layer is a part of, such as remote direct memory access (RDMA) or non-volatile memory express (NVMe). A connection interface, for example between the transport layer and the ULPs, can carry information related to shut-offs on individual connections. The connection interface can be implemented between components of the system separately configured for managing incoming requests to send data and managing connections on the transport layer.

The resource limit can be encoded as a signal as part of the interface between engines managing connections on the transport layer, with incoming requests from engines associated with ULPs or other protocols. In some examples, the signal can be quantized for efficient storage and computation, especially as the resource limit can vary not only by connection but depending on the type of data communication over the connection. A work scheduler for the ULP implemented on the NIC can precisely control how many packets enter the transport layer. A ULP work scheduler tracks the number of packets in flight to schedule incoming packets in accordance with the received resource limit for the connection.

Aspects of the disclosure provide for at least the following technical advantages. Resource isolation through individual connection temporary pausing can protect faster connections from performance degradation, even in the presence of hundreds (or more) of slower connections. Connections relying on shared resources in hardware can be impacted by a disproportionate use of those resources from a subset of slower connections. Resource isolation through individual shut-offs mitigates or reduces congestion or latency in the system caused at least in part by connections to and from these devices. A slower connection can occur for a variety of different reasons, for example due to network congestion, or congestion at the source or destination device. A connection can become slower under certain circumstances causing head-of-line blocking or other forms of network congestion. Slower connections can consume a majority of oversubscribed resources, leaving insufficient resources for other concurrent connections, which in turn causes those connections to slow down, as well.

Further, for a hardware-assisted transport layer, different engines within a network device of the transport layer may be configured separately for handling ULP work requests. The resource limit generated and communicated can be used to backpressure data sent to a ULP work engine to effectively backpressure future work requests.

The system can be configured to individually pause slower connections that impact the performance of other, faster connections. On the other hand, resource isolation through individual temporary pausing of connections allows a system to scale the number of slower connections, without impacting the performance of other connections. Hardware-assisted transport layers can make use of their associated hardware-accelerated operations, without performance trade-offs due to lack of connection scalability.

Example Systems

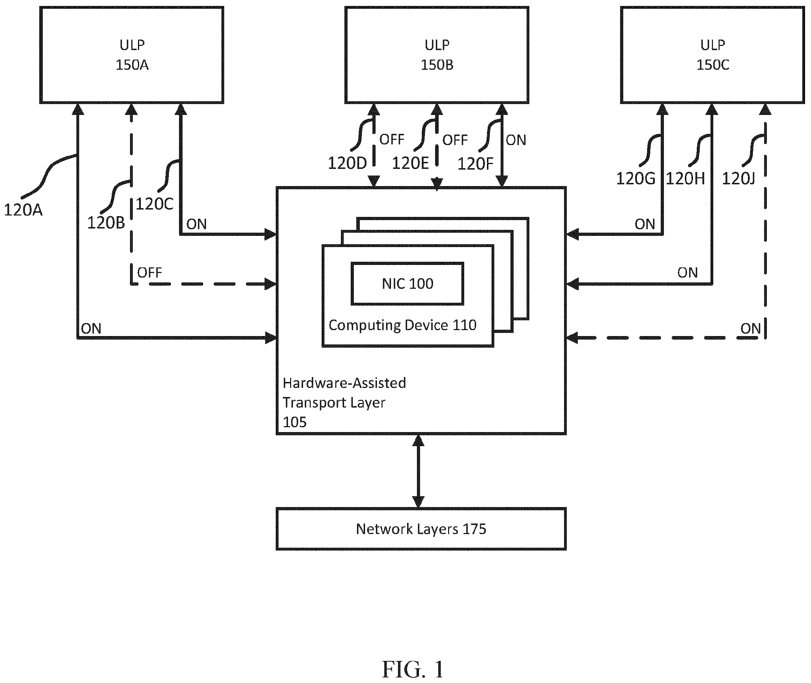

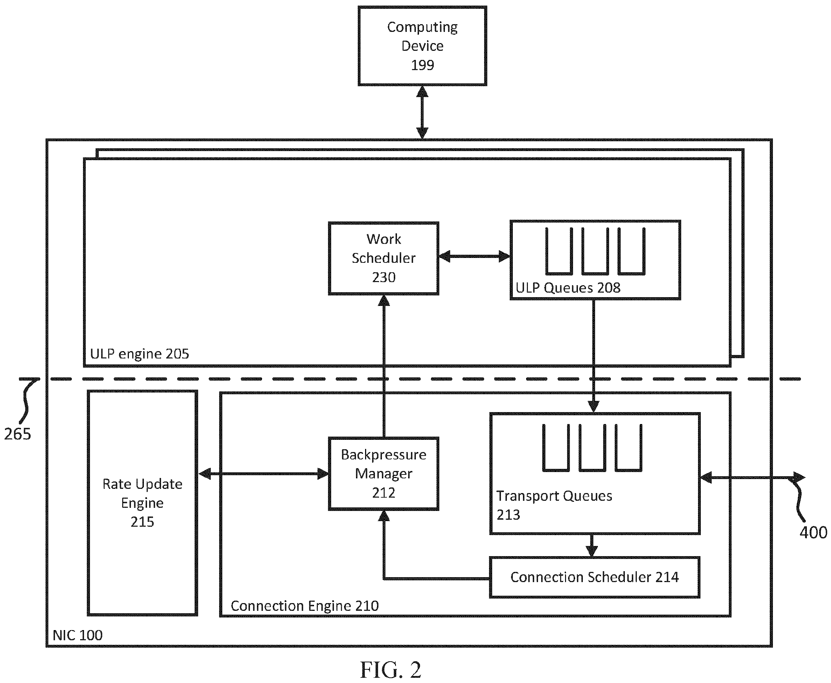

FIG. 1 is a block diagram of an example hardware-assisted transport layer 105 implementing resource isolation with ULPs 150A, 150B, 150C, according to aspects of the disclosure. The hardware-assisted transport layer 105 can be implemented as a number of computing devices, including computing device 110A-N, as illustrated via the cascading 110 blocks. Computing device 110 can include network interface card 100 (NIC), which can be configured to implement resource isolation with individual connection temporary pausing. Although the hardware-assisted transport layer 105 is referenced in the following description, aspects of the disclosure are applicable to any system configured with connections using oversubscribed or potentially oversubscribed hardware resources. Some or all of the computing devices can implement an appropriately configured NIC or other network device, according to aspects of the disclosure. Other devices not part of the transport layer 105 are not shown, but it is understood that various devices can be the source or destination of data along a connection. FIG. 2 illustrates an example computing device 199. The computing device can implement its own NIC, *e.g.,* like the NIC 100, for receiving and sending data.

Devices 110A-N and/or computing device 199 may implement various layers of communication protocols. For example, the hardware-assisted transport layer 105 may implement a reliable transport protocol. Computing devices 110A-N, 199 may communicate with each other, the transport layer 105, and/or other devices using an upper-layer protocol (ULP). A ULP can include any protocol for communicating data on a network stack (not shown). Example ULPs include remote direct memory access ("RDMA") and a non-volatile memory express ("NVMe"). Network layers 175 can include any other layer or layers implemented as part of a larger network model, which may include the hardware-assisted transport layer 105 and the devices 150A-C. Although shown separately from the NIC 100, in some examples one or more ULPs may be implemented in the NIC 100.

The hardware-assisted transport layer 105 can generate and manage connections between the layer 105 and devices in communication with the layer 105, *e.g.,* computing device 199. Example connections 120A, 120B, 120C, 120D, 120E, 120F, 120G, 120H, and 120J are shown, although in various examples the hardware-assisted transport layer 105 may manage hundreds or thousands of connections concurrently. A connection is used as an end-to-end construct that describes a bidirectional communication channel between a source and a destination. Connections 120A-J may be to other devices and/or connect devices 100A-N. The transport layer 105 is configured to generate or close connections.

The layer 105 can generate data from a shared pool of hardware resources. Hardware resources can be divided within and across connections, depending on the type of communication or data transaction being performed. For example, separate buffer space may be allocated for receiving versus sending data. Separate buffer space may also be allocated depending on the type of communication, for example requests versus responses. In some examples, buffer space in memory or other hardware resources can be allocated specifically for certain types of communication, either on the receiving or sending side of a data transaction.

The NIC 100 is configured to compute dynamic resource limits for each connection 120A-J, and individually backpressure each connection by sending a signal to the source of data for the connection when the resource limit is exceeded. The NIC 100 can manage data characterizing the connection, including current resource usage, congestion on the connection, and so on. Based on the data characterizing the connection, the NIC 100 can determine the current resource usage for the connection and compare the current resource usage with the resource limit. Resource availability can be quantified as a number of credits, representing, for example, bytes of memory, bytes of bandwidth, processing cycles, etc. For example, a total pool of resources may be represented as 4300 credits. Each connection can have a maximum credit allocation, for example 512 credits. Resource allocations may also be assigned to the different devices 150A-C separately.

In FIG. 1, connections 120A, 120C, 120F, and 120G are on, as indicated by solid lines. Connections 120B, 120D, 120E, and 120J are off, as indicated by dashed lines. Some connections are paused, for example, because the connections were occupying oversubscribed resources, reducing the efficient transmission of other, faster, connections, such as the connections 120A, 120C, 120F, and 120G. At a later point, *e.g.,* after a predetermined amount of time, or in response to changes in the network, the NIC 100 can update the resource limits for the different connections. After updating the resource limits, the NIC 100 may un-pause previously paused connections, and/or temporarily pause other connections operating in excess of their respective resource limits.

The transport layer 105 can mitigate or eliminate the pausing of all the connections globally. This mitigation or elimination of a global pause improves network operation overall, at least by making more efficient use of existing resources and improving network availability.

FIG. 2 is a block diagram of the example network interface card (NIC) 100, according to aspects of the disclosure. The NIC 100 can include a ULP engine 205, a connection engine 210, and a rate update engine 215. FIG. 2 shows ULP engine 205 implementing an example ULP. The NIC 100 can implement one or more engines for implementing different ULPs. A ULP engine is configured to implement a respective ULP, for example for formatting and communicating data in accordance with the respective ULP. For example, the ULP engine 205 can implement one or more of the ULPs 150A-150C.

Device 199 can be a device coupled to the NIC 100, *e.g.,* sharing the same board or housing as the NIC 100, or connected by some wired or wireless means to the NIC 100. The NIC 100 can receive data to and from network 400, for example through the connection engine 210 described presently.

Although FIG. 2 illustrates a NIC, some or all of the components and their respective functionalities described herein may be included in other network devices, such as switches, routers, etc. Components of the NIC 100 described as engines or managers can be implemented at least partially in hardware, *e.g.,* as one or more appropriately configured circuits or using processors that are configured to accelerate certain operations in hardware.

Connection engine 210 can be configured to set up connections and send data from a connection to the wire or other physical component of the network 400. The connection engine 210 can be used as part of implementing the hardware-assisted transport layer 105. The connection engine 210 includes connection queues 213, backpressure manager 212, and a connection scheduler 214.

ULP work engine 205 can include a work scheduler 230 associated with a particular ULP, for example RDMA or NVMe. In some examples, the work scheduler 230 schedules work requests according to any upper-layer protocol. In other examples, multiple instances of the work scheduler 230 are implemented across one or more NICs for handling commands, requests, or generally data corresponding to different ULPs. The work scheduler 230 sends data for transmitting to the connection engine 210. ULP queues 208 are queues of data still to be sent to the connection engine 210. Data can be dispatched in any of a variety of manners, such as in any form of round-robin scheduling.

Queues from connection queues 213 have data communicated with ULP queues 208, and vice versa. The connection scheduler 214 forms a connection, in which the NIC 100 exchanges data from a respective ULP queue to a respective connection queue. As part of scheduling the connection, the scheduler 214 allocates hardware resources for sending data over the connection, *e.g.,* processing cycles to cause data to enqueue to or dequeue from the queues, buffer space in memory to store data, bandwidth to communicate data between the queues over some type of interconnect, etc. The connection can be represented by metadata, specifying, for example, the queues forming, the resources used to send data over the connection, the state of the connection (e.g., paused or un-paused), and so on.

Without resource isolation, work scheduler 230 is not aware of congestion on the network and continues to send packets from the ULP queues 208 to the connection queues 213. The ULP queues 208 can build up, as slower connections will sit in the hardware-assisted transport layer 105 for longer periods of time. Faster transactions suffer from head-of-line blocking when the hardware-assisted transport layer 105 eventually runs out of resources. Packets in the connection queues 213 build up because the work scheduler 230 is not aware of growing network congestion.

The backpressure manager 212 is configured to calculate the dynamic resource limit for a connection and determine whether to cause the connection to temporarily pause. By causing the connection to temporarily pause, the backpressure manager 212 can cause the ULP work engine 205 to send fewer or no new data to the connection engine 210, for a period of time. Pausing the connection is a form of backpressure management, which can be performed for devices or other sources of data that are too opaque from the perspective of the layer 105 for more fine-grained backpressure techniques. The focus on individual connections mitigates or eliminates the need for a global pause, without requiring the NIC 100 to have a transparent view or control into how data is generated or transmitted by the data sources.

In FIG. 2, a NIC can receive data from device 199 at the ULP queues 208, send data to the connection queues 213, which can be communicated out to the network 400. In some examples, a NIC receives data from the network 400 at the connection queues and sends data to the ULP queues 208 for sending to the computing device 199. In both cases, *e.g.,* sending and receiving, the NIC 100 can backpressure data along connections used to transmit the data, according to aspects of the disclosure.

Backpressure line 265 can represent the point after which data from the backpressure manager 212 may be backpressured with paused/un-paused connections. Data from the backpressure manager 212 can indicate, *e.g.,* as metadata, the control state of a connection on which the data is sent. For example, a value of 0 or 1 can be the default, in which the ULP associated with the connection is allowed to transmit data to the NIC. For other values, the associated ULP is prevented from scheduling further data transmissions on the given connection. The field values can also specify certain types of data that can be transmitted or not on the connection, *e.g.,* requests versus responses. In some examples, the field may be multiple bits, indicating whether the connection should be temporarily paused or not.

The backpressure manager 212 can compute a dynamic resource limit for a connection based on the resource that is being shared, *e.g.,* a buffer or amount of memory, a processor or processing cycles, or bandwidth, which can vary for different connections depending on the type of data carried on the connection.

The computing resources for transmitting outgoing data can be pulled from a separate pool of resources, e.g., a separate pool of resources for requests, and a separate pool of resources for responses. The NIC 100 may manage or implement separate resources to ensure that each type of transaction has a minimum quantity of resources available for performing that type of transaction. Individual dynamic resource limits protect oversubscribed resources, at least because the NIC 100 can respond to pressure on a certain resource by reducing the limit of incoming transactions or temporarily pausing an individual connection without triggering a global pause.

The dynamic limit can be computed as a function of the resource free space and an alpha parameter. The alpha parameter is a value that quantifies the slowness of a connection, either at a NIC or on the network fabric of switches, cables, routers, etc., of the network on which data is communicated. For example, the backpressure manager can compute the dynamic limit for a connection using the example formula:

$$Dynamic\ Limit = \alpha * Resource\ Free\ Space$$

Resource free space indicates the free space available for the resource. Unlike connections created in software, the NIC 100 manages connections that are capped by the available resources accessible to the NIC 100, either internally or on a device in communication with the NIC 100. Basing the dynamic limit on available resource free space allows the NIC 100 to tie the dynamic limit to the condition of resources globally. This tie-in introduces a global hardware context to how the dynamic limit is generated, which helps address the problem of slower connections consuming oversubscribed resources in a manner that harms the performance of other connections sharing the same resources.

The dynamic alpha value ("$\alpha$") can be based in part on a base alpha value, selected based on the maximum credit allocation for a resource. The base alpha value can be a predetermined value, *e.g.,* 1/64, 1/32, 1/16, 1/8, ¼, ½, 2, 4, 8, etc. For example, the dynamic alpha value can be computed as a function of at least the base alpha value and beta values described presently. Lower base alpha values correspond to lower limits, representing a trade-off between how much of a resource a single connection is allowed to consume for itself.

Different resources may have different base alpha values. For example, if a pool of resources is allocated for receiving requests, the base alpha value may be different than a default, for example to have a value of 1 versus a value of 1/8. When different base alpha values are used, the values may be selected to be efficiently accessed in hardware and stored, for example with a bit shift. For instance, the backpressure manager 212 may use a base alpha value of 1/8 as a default, but then multiply the default by $2^3$ (representing a left shift by 3), to achieve a final alpha of 1.

In addition to the base alpha value, the backpressure manager uses beta values quantifying the congestion of the fabric and the NIC, respectively, as part of generating the dynamic alpha value. For measuring the congestion of the network fabric, the backpressure manager 212 can compute a ratio between a target round-trip time (RTT) and an actual RTT for data communicated over the network fabric. For measuring the congestion of the destination device, *e.g.,* a destination NIC, the backpressure manager 212 can compute a ratio between a buffer level measuring how much of a memory buffer forming part of a resource is used, over a target buffer level. In some examples, the backpressure manager can apply the following formulas for computing the dynamic alpha value:

$$B_f = \frac{Target\ RTT}{RTT}$$

$$B_n = \frac{Target\ Buffer\ Level}{Buffer\ Level}$$

$B_f$ is the beta value for the network fabric, and $B_n$ is the beta value for the NIC buffer. Although two measures are provided here for measuring congestion in the network fabric and NIC 100, respectively, any method of measuring congestion can be used. Target values for the RTT and the buffer level can be predetermined, for example, based on values that reduce or eliminate congestion when maintained by the network fabric and NIC 100, respectively.

The backpressure manager 212 can receive the beta values, or some or all of the inputs for computing the beta values, from a rate update engine, such as rate update engine 215. A rate update engine can be part of the NIC 100 and configured to decide at what rate each connection should transmit data over a network link. Rate update engine 215 can be configured to analyze network fabric and/or NIC 100 congestion, and provide congestion measurements, which can include an RTT or buffer level of the NIC 100. The rate update engine 215 can operate on congestion indicators or other packet metadata, to determine parameters for controlling the transmission of data packets. In some examples, the rate update engine 215 may only analyze traffic for providing congestion measurements, without further generating congestion control parameters.

Using the beta values, the backpressure manager 212 can compute different dynamic alpha values, for example based on the type of transaction carried over a connection and how congestion changes on the connection. For example, the backpressure manager 212 may compute different dynamic alpha values for connections carrying requests versus connections carrying responses. Connections may also carry different types of transactions, in which case different dynamic limits are applied by the backpressure manager 212 depending on the type of transaction currently being transmitted. Depending on the type of request, the backpressure manager 212 can use one or both of the beta values for computing the corresponding dynamic alpha value. Example formulas for computing dynamic alpha values for requests and responses, respectively, can be:

$$Dynamic\ Alpha\ for\ Requests = \left(B_f, B_n, 1.0\right) * base\_alpha$$

$$Dynamic\ Alpha\ for\ Responses = \left(B_f, 1.0\right) * base\_alpha$$

For example, for computing the dynamic alpha value for requests, the backpressure manager 212 can compute the minimum of the network fabric beta value, the NIC beta value, and the constant value 1, and multiply the minimum with the base alpha value. The constant value may be scaled, for example to scale up or down the dynamic limit computed using the dynamic alpha.

As another example, the backpressure manager 212 can compute the dynamic alpha value for responses as the minimum of the network fabric value or the constant value 1.0, multiplied with the base alpha value. Comparing the dynamic alpha values, the dynamic alpha value for responses does not rely on the NIC beta value, as sending responses is bottlenecked only by congestion on the NIC itself, and not the network fabric. On the other hand, the dynamic alpha value for requests is computed as a function of both beta values, at least because receiving and processing requests is bottleneck by congestion on both the network fabric and the NIC.

Resource free space can be determined as a function of other variables for the resource in question. An example formula for determining the resource free space by the backpressure manager 212 is:

$$Resource\ Free\ Space = Total\ Allocation - Headroom - Total\ Occupancy$$

Total allocation refers to the total amount of a resource available for different types of connection. The total allocation may vary for each pool of resources, e.g., a pool of resources for requests versus responses, or sending data versus receiving data. For example, separate buffers may be allocated in memory for different types of communication, with connections being allocated from those separate pools corresponding to the type of communication for each pool. Larger resource free space can result in larger resource limits for each connection. As the available resources come under pressure, the NIC 100 dynamically adjusts resource limits for the connections.

Headroom refers to how much of the total allocation is reserved as a buffer that is not initially allocated to the connections, for example to hedge against unexpected spikes in resource usage. The headroom amount can be predetermined. Smaller headroom may not completely prevent a global pause from occurring but increases the overall utilization of the respective resource. Larger headroom reduces available resources but is less likely to lead to global pause due to an unexpected increase of resource usage. In some examples, the headroom is based on the total number of transactions that can fit in a ULP processing pipeline, *e.g.,* processing and sending data from the connection engine 210 to the ULP engine 205, reflecting the number of inflight transactions that may occur at a time between a ULP and the hardware-assisted transport layer or other system implementing the NIC 100. As with total allocations, each resource may have a different headroom amount.

Total occupancy refers to the portion of the total allocation currently occupied or that is in use. The connection scheduler 214 can be configured to provide some or all of this information to the backpressure manager 212, as part of its other functions in generating queue pairs for connections between queues in the ULP queues 208 and the connection queues 213.

Resource free space can measure the degree of oversubscription on computing resources allocated for generating new connections. If the resources are at least partially oversubscribed, then at least some resources have to be shared between different connections, which in turn can introduce latency and performance issues when slower connections use the oversubscribed resources at the expense of the faster connections. Basing the resource limit at least partially on the resource free space allows the backpressure manager 212 to account for this oversubscription in determining whether the limit of a connection should be reduced or increased.

In some examples, the resource limit computed by the backpressure manager 212 may be bounded. Bounding the resource limit may assist in managing long-term or persistent congestion on a connection. For example, in the long-term, the RTT and the buffer level may be at or near their target levels, and so connection slowness may be accounted for using the above-described formulas for beta values. The upper bound can be based on the length of a congestion window of either NIC 100 or the network fabric, plus the quantity of packets in the pipeline for a given ULP. Congestion windows for either the NIC 100 or the network fabric manage how many packets can be sent or received through a connection.

For example, the backpressure manager 212 can compute the maximum limit as the minimum of either the NIC congestion window or the fabric congestion window plus the number of packets in an ULP pipeline. The backpressure manager 212 can calculate the number of packets in the ULP pipeline as the delay in the pipeline, *e.g.,* the delay rate of the pipeline and the connection queue sending rate. The connection queue sending rate can be estimated as the length of the congestion window divided by the RTT of the network. The backpressure manager 212 can compute the maximum limit for each connection and/or for each ULP.

As part of determining whether to pause a connection, the backpressure manager 212 can implement a control loop to check on the resources available for maintaining the current connections. The control loop, when executed, can cause the backpressure manager 212 to send signals, for example in the form of a value for the control state for the connection. The control loop can be executed periodically, *e.g.,* every few seconds or few nanoseconds; or the control loop can be performed in response to a condition, *e.g.,* receiving new data.

An example of the logic of the control loop can be found in the table below.

| 1 | For All Request Resources: | |
|---|---|---|
| 2 | If (Occupancy[Connection] > Dynamic_limit[Connection, Resource]) | |
| 3 | | return 1 |
| 4 | return 0 | |
| | TABLE 1 | |

In TABLE 1, a conditional statement is evaluated in line 2, for all request resources indicated in line 1. The control loop logic can run separately for different types of resources, *e.g.,* request resources, response resources, etc., or over all types of resources in a single loop. For a given resource, the occupancy of a connection is compared against the dynamic limit assigned to the connection for that resource. If the occupancy of the connection (Occupancy[Connection] in line 2) is greater than the dynamic limit of the connection for the resource (Dynamic_limit[Connection, Resource]), the backpressure manager 212 returns a value of 1, according to line 3. As described above, the value 1 may be the value predetermined to indicate that a connection be paused. If the occupancy of the connection is less than or equal to the dynamic limit of the connection for the resource, then the backpressure manager 212 returns a value of 0, according to line 4. The value 0 may correspond to the default value for the control state for the connection, indicating that the connection is not paused.

The hardware-assisted transport layer 105 can support multiple ULPs, such as both RDMA and NVMe. Each ULP may have a static allocation of hardware resources for connections made corresponding to the ULP, which may or may not cause the allocation to be oversubscribed. The NIC 100 is configured to backpressure each ULP connection, while adhering to resource limits established connections for each ULP.

The backpressure manager 212 can receive and track an allocation for each resource globally, *e.g.,* among all ULPs, and an allocation for each resource within a specific ULP. The allocation can be measured in credits, and each ULP and/or resource may have a different respective allocation. The resource allocation between ULPs can be logically divided into a guaranteed allocation for each ULP, and a shared allocation shared between connections for the ULPs. In some examples, the backpressure manager 212 uses the following formulas to determine the guaranteed and shared allocation, respectively:

$$ULP_{shared} = max(0, sum(ULP\ Allocations) - Total\ Allocation$$

$$ULP_{guaranteed} = max(0, ULP_{Allocation} - ULP_{shared})$$

$ULP_{shared}$ is the shared ULP allocation, which the backpressure manager 212 can compute as the maximum of the sum of all resource allocations of the ULPs (*sum(ULP Allocations)*) and zero, minus the total resource allocation. $ULP_{guaranteed}$ is the guaranteed resource allocation, which is the maximum of the difference between the allocation of a resource and the shared allocation, or zero.

The following table is a summary of variables that the backpressure manager 212 can manage, for each ULP:

| | |
|---|---|
| $ULP_{allocation}$ (per ULP, per resource) | Static |
| $ULP_{guaranteed}$ (per ULP, per resource) | Static |
| *Headroom* (per resource, and optionally per ULP) | Static |
| *Total Occupancy* (per ULP, per resource) | Dynamically updated |
| TABLE 2 | |

The left-hand side of TABLE 2 lists the variables, with parenthetical descriptions of how often each variable is tracked, *e.g.,* either per ULP, per resource type or subset, or a combination of the preceding. The right-hand side summarizes whether or not the variable changes or remains static. As shown in TABLE 2, only the total occupancy changes dynamically, given that occupancy changes as connections are generated and destroyed.

The backpressure manager 212 can use the managed variables to compute a resource free space, as part of computing a dynamic limit for a given resource and ULP. For example, the backpressure manager 212 can apply the following formula:

$$Resource\ Free\ Space = ULP\ Allocation - Headroom - Current\ Occupancy$$

For each ULP, the backpressure manager 212 can compute the resource free space as the difference between the resource allocation for the ULP ($ULP_{Allocation}$), the headroom predetermined for the resource used by connections carrying data corresponding to the ULP, and the current occupancy of the resource. The backpressure manager 212 can compute the current occupancy of the resource per ULP, for example as:

$$Total\ ULP\ Occupancy = max(0, Other\ ULP\ Occupancy - Other\ ULP\ Guaranteed)$$

The total ULP occupancy can be determined as the maximum of zero and the difference between the occupancy of connections for other ULPs and the guaranteed allocation for connections for the other ULPs.

The following examples of the backpressure manager 212 computing resource limits for connections corresponding to different ULPs A and B at various stages of resource oversubscription. For these examples, suppose connections corresponding to ULP A have a total occupancy of 600 resource credits and connections corresponding to ULP B have a total occupancy of 50 resource credits for connections corresponding to each ULP. Further suppose for the purposes of this example that the headroom for both ULPs is 100 resource credits.

In one example, the backpressure manager 212 determines resource limits for ULPs A and B when no oversubscription of resources occurs. For example, if the total resource allocation is 1000 credits, ULP A may have an allocation of 800 credits, and ULP B may have an allocation of 200 credits. Because the allocations add up to the total allocation, ULP A has a guaranteed allocation of 800 and ULP B has a guaranteed allocation of 200. The shared ULP allocation is zero. In computing the limit for connections corresponding to ULP A, the backpressure manager 212 can compute the current occupancy for ULP A as 600 (600 + $max(0, 50 - 200)$) and free space for ULP A as 100 (800 - 100 - 600). In computing the limit for connections corresponding to ULP B, the backpressure manager 212 can compute the current occupancy for ULP B as 50 (50 + $max(0, 600 - 800)$) and free space for ULP B as 50 (200 - 100 - 50). The backpressure manager 212 can compute the dynamic limits for the connections using a corresponding free space value for each ULP, and a dynamic alpha value computed as described herein.

In one example, the backpressure manager 212 determines resource limits for ULPs A and B when full oversubscription of resources occurs. For example, if the total resource allocation is 1000 credits, ULP A may have an allocation of 1000 credits, and ULP B may have an allocation of 1000 credits. Each ULP has a guaranteed allocation of 0 and a shared ULP allocation of 1000. In computing the limit for connections corresponding to ULP A, the backpressure manager 212 can compute the current occupancy for ULP A as 600 (600 + $max(0, 50 - 0)$) and free space for ULP A as 250 (1000 - 100 - 650). In computing the limit for connections corresponding to ULP B, the backpressure manager 212 can compute the current occupancy for ULP B as 650 (50 + $max(0, 600 - 0)$) and free space for ULP B as 250 (1000 - 100 - 650). The backpressure manager 212 can compute the dynamic limits for the connections using a corresponding free space value for each ULP, and a dynamic alpha value computed as described herein.

In one example, the backpressure manager 212 determines resource limits for ULPs A and B when full oversubscription of resources occurs. For example, if the total resource allocation is 1000 credits, ULP A may have an allocation of 800 credits, and ULP B may have an allocation of 400 credits. ULP A has a guaranteed allocation of 600 and ULP B has a guaranteed allocation of 200. The shared ULP allocation is 200. In computing the limit for connections corresponding to ULP A, the backpressure manager 212 can compute the current occupancy for ULP A as 600 (600 + $max(0, 50 - 200)$) and free space for ULP A as 100 (800 - 100 - 600). In computing the limit for connections corresponding to ULP B, the backpressure manager 212 can compute the current occupancy for ULP B as 50 (50 + $max(0, 600 - 600)$) and free space for ULP B as 250 (400 - 100 - 50). The backpressure manager 212 can compute the dynamic limits for the connections using a corresponding free resource space value for each ULP, and a dynamic alpha value computed as described herein.

Although examples are provided for ULPs, the same logic can be applied for different data transaction types, for example when determining the limit for connections that carry requests versus responses, as described herein.

Example Methods

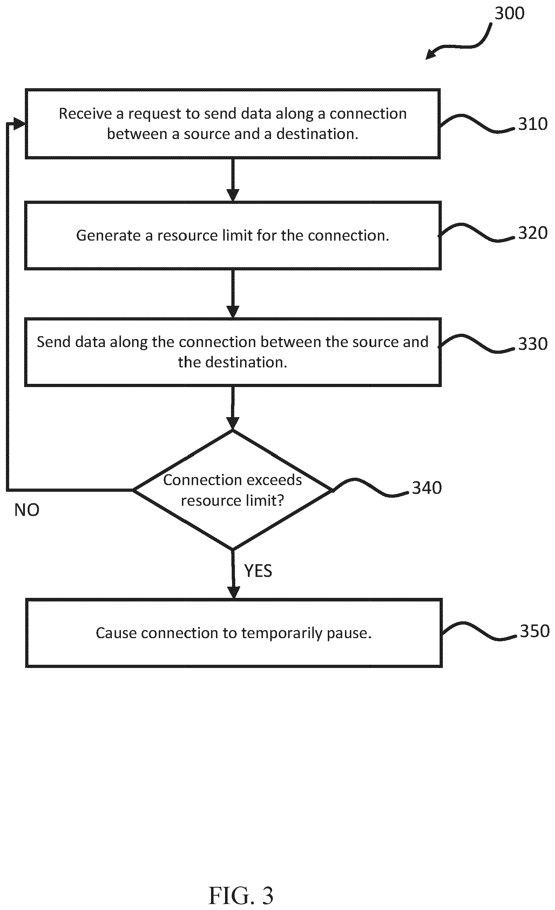

FIG. 3 is a flow diagram of an example process 300 for resource connection isolation based on a resource limit, according to aspects of the disclosure. The example process can be performed by a NIC or other network devices, such as the NIC 100 of FIG. 1.

The NIC receives a request for data to be sent along a connection between a source and a destination, according to block 310. The source and destination may be devices in communication with the NIC and each other, for example over a transport layer at least partially implemented in hardware.

The NIC generates a resource limit for the connection, according to block 320. Generating the resource limit for the connection can include generating the resource limit based on the total resource free space of the hardware. In some examples, if multiple resources have their respective resource limits exceeded their respective resource limit, then the connection can be temporarily paused. Example resources can include a buffer allocation in memory for receiving the request, a buffer allocation in memory for sending a response to the request, or a buffer allocation in memory for other operations corresponding to connection management and operation. The NIC can maintain a plurality of connections, including the connection. The total resource free space can be based at least partially on: a total allocation of the resources available in the hardware for the plurality of connections, a predetermined headroom of reserved resources that are not allocated to the plurality of connections, and a total occupancy of resources in the hardware.

The NIC sending data over the connection between the source and the destination, according to block 330. Sending and receiving data consumes resources available in the hardware at least partially implementing the transport layer.

The NIC determines whether the connection exceeds the resource limit, according to block 340. For example, the NIC can manage data characterizing the connection, including current resource usage, congestion on the connection, and so on. Based on the data characterizing the connection, the NIC 100 can determine the current resource usage for the connection and compare the current resource usage with the resource limit. If the NIC determines that the connection exceeds the resource limit ("YES"), then the NIC causes the connection to temporarily pause, according to block 350.

If the NIC determines that the connection does not exceed the resource limit ("NO"), then the NIC can loop back and receive a new request for a connection. In some examples, the NIC can generate an updated limit and update connections to be associated with the updated limit. Based on an updated limit, other connections can be paused, reducing or eliminating incoming data sent over the connection.

The NIC can generate multiple different resource limits, each resource limit corresponding to a respective type of data communication over the connection and a respective resource allocated to the respective type of data communication. Resource limits may also be based on different ULPs that are associated with various different generated connections. ULPs can include, for example, RDMA or NVMe. Each resource limit can be generated based on a measurement of congestion of a network used by the connection to communicate data, or a measurement of congestion of a device implementing the one or more processors. Generating the resource limit for connections corresponding to ULPs can be based at least partially on a resource allocation for the ULP. Measurements of congestion can be received from an appropriately configured rate update engine.

Implementations of the present technology can each include, but are not limited to, the following. The features may be alone or in combination with one or more other features described herein. In some examples, the following features are included in combination:

(1) A method for resource isolation during data communication, the method including: receiving, by one or more processors, a request to send data along a connection between a source and a destination; generating, by the one or more processors, a resource limit for the connection, the resource limit based at least partially on free resource space for computing resources allocated for sending data over a plurality of connections; sending, by the one or more processors, data over the connection between the source and the destination; and determining, by the one or more processors, that the connection exceeds the resource limit; and in response to determining that the connection exceeds the resource limit, causing, by the one or more processors, the connection to pause.

(2) The method of (1), wherein: the one or more processors are part of a transport layer at least partially implemented in hardware; the computing resources are accessible to the transport layer for generating the plurality of connections; and the computing resources are at least partially oversubscribed.

(3) The method of (2), further including: generating, by the one or more processors, an updated resource limit; and updating, by the one or more processors, the connection with the updated limit.

(4) The method of (2) or (3), further including maintaining a plurality of connections, including the connection, wherein the total resource free space is based at least partially on: a total allocation of the resources available for the plurality of connections, a predetermined headroom of reserved resources that are not allocated to the plurality of connections, and a total occupancy of the resources.

(5) The method of (4), wherein resources include at least one of: a buffer allocation in memory for receiving the request; a buffer allocation in memory for sending a response to the request; or a buffer allocation in memory for generating the connection.

(6) The method of any one of (1) through (5), further including generating, by the one or more processors, a plurality of resource limits, each resource limit corresponding to a respective type of data communication over the connection and a respective resource allocated to the respective type of data communication.

(7) The method of (6), wherein generating the plurality of resource limits includes generating each resource limit based on at least one of: a measurement of congestion of a network used by the connection to communicate data, or a measurement of congestion of a device implementing the one or more processors.

(8) The method of any one of (1) through (7), wherein generating the resource limit for the connection includes generating the resource limit based at least in part on an allocation of hardware for connections communicating data in accordance with a one or more upper-layer protocols (ULPs).

(9) The method of (8), wherein the one or more upper-layer protocols include at least one of remote direct memory access (RDMA) or nonvolatile memory express (NVMe).

(10) A system, including: a network device including one or more processors configured to: receive a request for a connection between a source and a destination; generate a resource limit for the connection, the resource limit based at least partially on free resource space for computing resources allocated for sending data over a plurality of connections; send data over the connection between the source and the destination; and determine that the connection exceeds the resource limit, and in response to the determination that the connection exceeds the resource limit, cause the connection to pause.

(11) The system of (10), wherein the one or more processors are configured to perform the methods as in any one of (2) through (9)

(12) One or more non-transitory computer-readable storage media storing instructions that when executed by a network device including one or more processors, cause the one or more processors to perform operations including: receiving a request for a connection between a source and a destination; generating a resource limit for the connection, the resource limit based at least partially on free resource space for computing resources; sending data over the connection between the source and the destination; and determining that the connection exceeds the resource limit; and in response, to determining that the connection exceeds the resource limit, causing the connection to pause.

(13) The computer-readable storage media of (12), wherein the operations further include the operations as in the methods of any one of (2) through (9).

Example Computing Environment

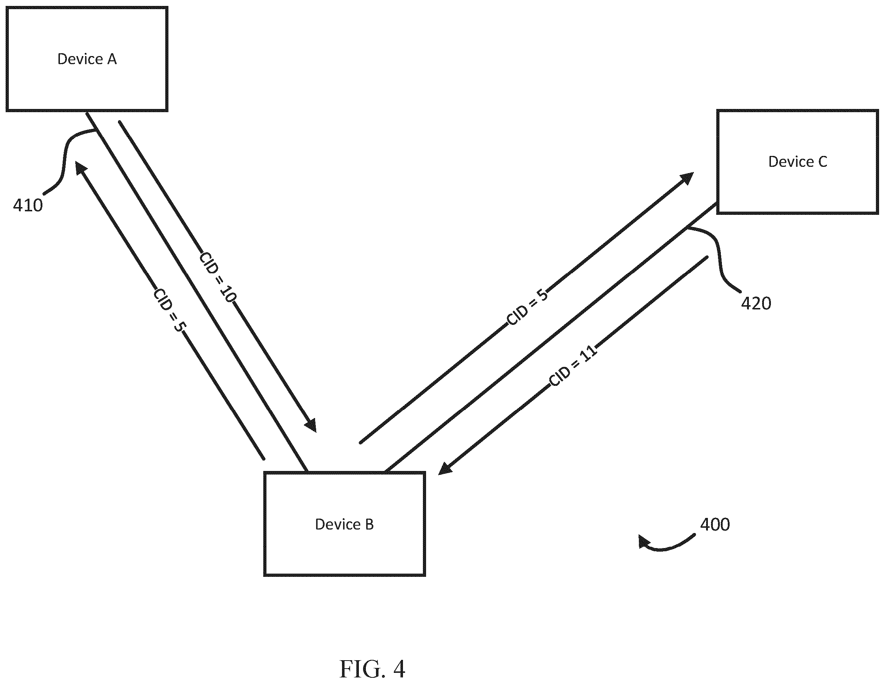

FIG. 4 is a block diagram of an example network 400 implementing an example NIC according to aspects of the disclosure. The network 400 includes various devices, such as device A, device B, and device C. The devices A, B, and C may be any device capable of communication over the network 400. The devices A, B, and C may be physical devices, virtual devices, or a combination of the two. Examples of physical devices include a microcontroller, a personal computing device, a mobile device, a wearable device, a server. Examples of virtual devices may be virtual devices, for example a virtual machine. To communicate with one another, connections are formed between the entities, such as connection 410 between entities A and B, and connection 420 between entities A and C. The devices may communicate over the connections using one or more protocols. For example, reliable transport is a protocol that notifies the sources whether or not the delivery of data to an intended destination was successful.

A connection may be identified by a pair of connection IDs ("CIDs"), one in each direction of communication. CIDs may be allocated by a receiver device during the connection setup process and have no global significance outside of the parties involved. Thus, the connection 410 between devices A and B may have a CID with value 5 for the direction from A to B, and a CID with value 10 for the direction from B to A. The connection 420 between devices A and C may have a CID value 5 for the direction from A to C and a CID with value 11 for the direction from C to A. Further, CIDs assigned by a device or "Source CIDs" of a device must have different values. In the example shown, the CIDs assigned by device A or Source CIDs of device A have different values 10 and 11. In contrast, "Destination CIDs" of a device are assigned by other devices and may have the same value. Thus, in the example shown, the Destination CIDs of device A are assigned by devices B and C respectively, which may have the same value 5.

Packets may be transmitted over the connections between the source and destination devices. In this regard, a packet is a basic unit of communication across a connection. A packet may have a predetermined size, for example up to a maximum transfer unit ("MTU") in length. A packet may have a header including information about the packet and its transmission, and a payload of data. For reliable transport, a reliable transport packet may include the Destination CID, such as in a header. For example, when device B receives a packet over the connection 410 with the Destination CID of 5, device B may identify the packet as coming from device A and may then notify device A that the packet has been received by sending an acknowledgment over the connection 410 referencing this packet and its CID of 5. The acknowledgment itself may be sent as a packet including the Destination CID of 10.

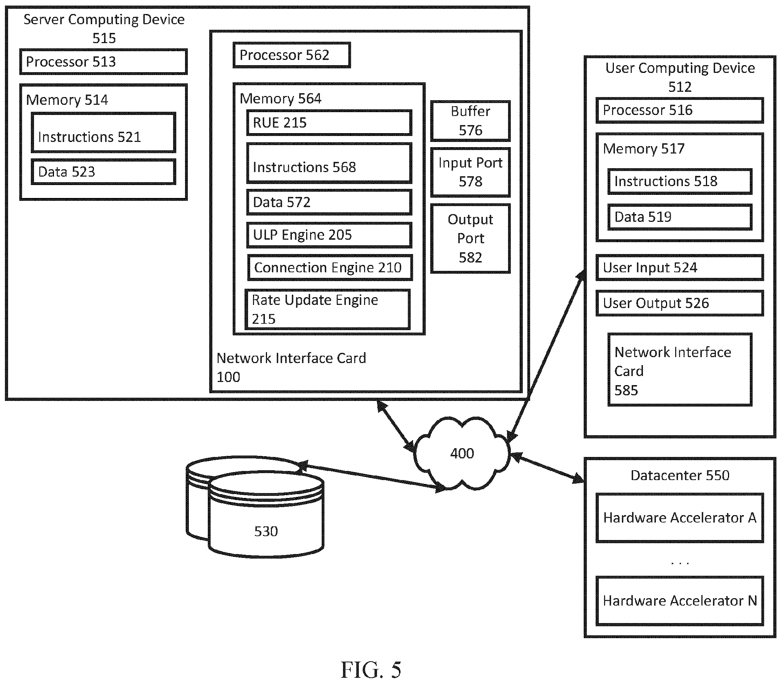

FIG. 5 is a block diagram of an example computing environment 500 for implementing resource isolation, according to aspects of the disclosure. FIG. 5 illustrates example resources, e.g., processors, memory, etc., which can be allocated by the NIC for sending data over connections. Network interface card 100 can be implemented on one or more devices having one or more processors in one or more locations, such as in server computing device 515. User computing device 512 and the server computing device 515 can be communicatively coupled to one or more storage devices 530 over a network 400. For example, devices 515 and 512 may correspond to devices A, B, or C as shown and described with reference to FIG. 4. The storage device(s) 530 can be a combination of volatile and non-volatile memory and can be at the same or different physical locations than the computing devices 512, 515. For example, the storage device(s) 530 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 515 can include one or more processors 513 and memory 514. The memory 514 can store information accessible by the processor(s) 513, including instructions 521 that can be executed by the processor(s) 513. The memory 514 can also include data 523 that can be retrieved, manipulated, or stored by the processor(s) 513. The memory 514 can be a type of non-transitory computer readable medium capable of storing information accessible by the processor(s) 513, such as volatile and non-volatile memory. The processor(s) 513 can include one or more central processing units (CPUs), graphics processing units (GPUs), field-programmable gate arrays (FPGAs), and/or application-specific integrated circuits (ASICs), such as tensor processing units (TPUs).

The instructions 521 can include one or more instructions that when executed by the processor(s) 513, causes the one or more processors to perform actions defined by the instructions. The instructions 521 can be stored in object code format for direct processing by the processor(s) 513, or in other formats including interpretable scripts or collections of independent source code modules that are interpreted on demand or compiled in advance.

The data 523 can be retrieved, stored, or modified by the processor(s) 513 in accordance with the instructions 521. The data 523 can be stored in computer registers, in a relational or non-relational database as a table having a plurality of different fields and records, or as JSON, YAML, proto, or XML documents. The data 523 can also be formatted in a computer-readable format such as, but not limited to, binary values, ASCII, or Unicode. Moreover, the data 523 can include information sufficient to identify relevant information, such as numbers, descriptive text, proprietary codes, pointers, references to data stored in other memories, including other network locations, or information that is used by a function to calculate relevant data.

Network interface card (NIC) 100 can be configured similar to the server computing device 515, with one or more processors 562 and memory 564, with instructions 568 and data 572. NIC 100 includes input port 578, output port 582, and buffer 576. The NIC 100 can include the connection engine 210, the ULP work engine 205, and the rate update engine 215, for example as shown and described with reference to FIG. 2. The engines 205, 210, 215 may be implemented in a combination of software and hardware and may be part of the instructions 568 or implemented as separate components, from example-to-example.

Although buffer 576 and memory 564 are shown as being separate components, the buffer 576 and the memory 564 may be implemented together or separate from one another. The input port 578 may receive data packets from one or more sources, such as another NIC, switch, router, or other such network devices capable of transmitting packets. The output port 582 may transmit data packets to one or more destinations, which may include other network devices capable of receiving packets.

A NIC may operate as both a transmitter and a receiver. Although not shown, the input port 578 and output port 582 may include logic for receiving and sending packets in accordance with instructions received from the ULP work engine 205 and/or the connection engine 210. Moreover, NICs may include more than one input and/or output port.

The buffer 576 may be generally structured as an array of cells configured to hold data packets received from another network device and/or a computing device. The cells may operate as packet buffers from which the data packets in the buffer can be passed to another network device and/or a computing device. For instance, NIC 100 may be attached to a server computing device, such as server computing device 515. Accordingly, the NIC 100 may pass the data packets received from transmitters and stored in the buffer 576 to other components of the server computing device 515, such as processor 513 or memory 514. In another example, NIC 100 may be attached to another NIC. Accordingly, the NIC 100 may pass the data packets received from transmitters and stored in the buffer 576 to other NICs.

The buffer 576 may be constructed from integrated memory within the NIC 100 including any of DRAM, SRAM, etc., stacked memory including memory on one or more separate dies which are stacked onto the memory controller, co-packaged memory including one or more separate dies connected to the memory controller 584 through an interposer or substrate, known as high-bandwidth memory, and/or off-chip memory-such as a DRAM module.

The user computing device 512 can also be configured similar to the server computing device 515, with one or more processors 516, memory 517, instructions 518, and data 519. The user computing device 512 can also include a user output 526, and a user input 524. The user computing device 512 may also include NIC 585 configured similar to the NIC 100. Although described as a user computing device, the device 512 may be any type of computing device, including another server computing device.

The user input 524 can include any appropriate mechanism or technique for receiving input from a user, such as keyboard, mouse, mechanical actuators, soft actuators, touchscreens, microphones, and sensors. The server computing device 515 can be configured to transmit data to the user computing device 512, *e.g.,* using a connection generated by the NIC 100 and/or the NIC 585, and the user computing device 512 can be configured to display at least a portion of the received data on a display implemented as part of the user output 526. The user output 526 can also be used for displaying an interface between the user computing device 512 and the server computing device 515. The user output 526 can alternatively or additionally include one or more speakers, transducers or other audio outputs, a haptic interface or other tactile feedback that provides non-visual and non-audible information to the platform user of the user computing device 512.

Although FIG. 5 illustrates the processors 513, 516 and the memories 514, 517 as being within the computing devices 515, 512, components described in this specification, including the processors 513, 516, 562 and the memories 514, 517, 564 can include multiple processors and memories that can operate in different physical locations and not within the same computing device. For example, some of the instructions 521, 518, 568 and the data 523, 519, 572 can be stored on a removable SD card and others within a read-only computer chip. Some or all of the instructions and data can be stored in a location physically remote from, yet still accessible by, the processors 513, 516, 562. Similarly, the processors 513, 516, 562 can include a collection of processors that can perform concurrent and/or sequential operation. The computing devices 515, 512, 562 can each include one or more internal clocks providing timing information, which can be used for time measurement for operations and programs run by the computing devices 515, 512, 562.

The server computing device 515 can be configured to receive requests to process data from the user computing device 512. For example, the environment 500 can be part of a computing platform configured to provide a variety of services to users, through various user interfaces and/or APIs exposing the platform services. One or more services can be a machine learning framework or a set of tools for generating neural networks or other machine learning models according to a specified task and training data.

Datacenter 550 can be in communication one or both of the server computing device 515 and the user computing device 512. The datacenter 550 can include a number of computing devices, such as hardware accelerators A-N. The hardware accelerators A-N and/or other devices can be used to perform services offered by the computing platform or the environment 500. In some examples, one or both of the devices 515, 512, are physically housed in the datacenter 550. The datacenter 550 can be implemented in one or more locations with one or more devices which are configured to communicate data using one or more NICs as described herein.

The devices 512, 515, and datacenter 550 can be capable of direct and indirect communication over the network 400. The devices 515, 512, as well as devices of the datacenter 550, can set up listening sockets that may accept an initiating connection for sending and receiving information. The network 400 itself can include various configurations and protocols including the Internet, World Wide Web, intranets, virtual private networks, wide area networks, local networks, and private networks using communication protocols proprietary to one or more companies. The network 400 can support a variety of short- and long-range connections. The short- and long-range connections may be made over different bandwidths, such as 2.402 GHz to 2.480 GHz (commonly associated with the Bluetooth® standard), 2.4 GHz and 5 GHz (commonly associated with the Wi-Fi® communication protocol); or with a variety of communication standards, such as the LTE® standard for wireless broadband communication. The network 400, in addition or alternatively, can also support wired connections between the devices 512, 515, and devices of the datacenter 550, including over various types of Ethernet connection.

Although a single server computing device 515, user computing device 512, and datacenter 550 are shown in FIG. 5, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed software, firmware, hardware, or a combination thereof that cause the system to perform the operations or actions. For one or more computer programs to be configured to perform operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC), such as a Tensor Processing Unit (TPU). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" can refer to a software-based system, subsystem, or process that is programmed to perform one or more specific functions. The engine can be implemented as one or more software modules or components or can be installed on one or more devices in one or more locations. A particular engine can have one or more devices dedicated thereto, or multiple devices can be installed and running on the same device or device. In some examples, an engine can refer to a hardware-based system, subsystem, or process at least partially implemented as one or more appropriately configured to perform one or more specific functions.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, *e.g.,* a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, *e.g.,* internal hard disks or removable disks, magneto optical disks, CD-ROM disks, DVD-ROM disks, or combinations thereof.

Aspects of the disclosure can be implemented in a computing system that includes a back-end component, *e.g.,* as a data server, a middleware component, *e.g.,* an application server, or a front-end component, *e.g.,* a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), *e.g.,* the Internet.

The computing system can include clients and servers. A client and server can be remote from each other and interact through a communication network. The relationship of client and server arises by virtue of the computer programs running on the respective computers and having a client-server relationship to each other. For example, a server can transmit data, *e.g.,* an HTML page, to a client device, *e.g.,* for purposes of displaying data to and receiving user input from a user interacting with the client device. Data generated at the client device, *e.g.,* a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including," and the like, should not be interpreted as limiting the subject matter of the claims to the specific examples; rather, the examples are intended to illustrate only one of many possible embodiments. Further, the same reference numbers in different drawings can identify the same or similar elements.

**Claims**

1. A method for resource isolation during data communication, the method comprising

   receiving, by one or more processors, a request to send data along a connection between a source and a destination;
   generating, by the one or more processors, a resource limit for the connection, the resource limit based at least partially on free resource space for computing resources allocated for sending data over a plurality of connections;
   sending, by the one or more processors, data over the connection between the source and the destination; and
   determining, by the one or more processors, that the connection exceeds the resource limit; and
   causing, by the one or more processors, the connection to pause based on a determination that the connection exceeds the resource limit.

2. The method of claim 1, wherein:

   the one or more processors are part of a transport layer at least partially implemented in hardware;

the computing resources are accessible to the transport layer for generating the plurality of connections; and
the computing resources are at least partially oversubscribed.

3. The method of claim 2, further comprising:

generating, by the one or more processors, an updated resource limit; and
updating, by the one or more processors, the connection with the updated resource limit.

4. The method of one of claims 2 or 3, further comprising maintaining a plurality of connections, including the connection, wherein the total resource free space is based at least partially on:

a total allocation of the resources available for the plurality of connections,
a predetermined headroom of reserved resources that are not allocated to the plurality of connections, and
a total occupancy of the resources,

wherein, optionally, resources comprise at least one of:

a buffer allocation in memory for receiving the request;
a buffer allocation in memory for sending a response to the request; or
a buffer allocation in memory for generating the connection.

5. The method of one of claims 1 to 4, further comprising generating, by the one or more processors, a plurality of resource limits, each resource limit corresponding to a respective type of data communication over the connection and a respective resource allocated to the respective type of data communication, wherein, optionally, generating the plurality of resource limits comprises generating each resource limit based on at least one of:

a measurement of congestion of a network used by the connection to communicate data, or
a measurement of congestion of a device implementing the one or more processors.

6. The method of one of claims 1 to 5, wherein generating the resource limit for the connection comprises generating the resource limit based at least in part on an allocation of hardware for connections communicating data in accordance with a one or more upper-layer protocols, ULPs, wherein, optionally, the one or more upper-layer protocols comprise at least one of remote direct memory access, RDMA, or nonvolatile memory express, NVMe.

7. A system, comprising:
a network device comprising one or more processors configured to:

receive a request for a connection between a source and a destination;
generate a resource limit for the connection, the resource limit based at least partially on free resource space for computing resources allocated for sending data over a plurality of connections;
send data over the connection between the source and the destination; and
determine that the connection exceeds the resource limit, and
cause the connection to pause when the connection exceeds the resource limit.

8. The system of claim 7, wherein:

the network device is part of a transport layer at least partially implemented in hardware;
the computing resources are accessible to the transport layer for generating the plurality of connections; and
the computing resources are at least partially oversubscribed.

9. The system of claim 8, the one or more processors are further configured to:

generate, by the one or more processors, an updated resource limit; and
update, by the one or more processors, the connection with the updated limit;

and/or
wherein the network device is, optionally, a network interface card.

**10.** The system of claim 8 or 9,

the one or more processors further configured to maintain the plurality of connections, including the connection, wherein the total resource free space is based at least partially on:

a total allocation of the resources available for the plurality of connections,
a predetermined headroom of reserved resources that are not allocated to the plurality of connections, and
a total occupancy of the resources;

wherein, optionally, resources comprise at least one of:

a buffer allocation in memory for receiving the request;
a buffer allocation in memory for sending a response to the request; or
a buffer allocation in memory for generating the connection.

**11.** The system of one of claims 7 to 10, wherein the one or more processors are further configured to generate a plurality of resource limits, each resource limit corresponding to a respective type of data communication over the connection and a respective resource allocated to the respective type of data communication.

**12.** The system of claim 11, wherein in generating the plurality of resource limits, the one or more processors are configured to generate each resource limit based on at least one of:

a measurement of congestion of a network used by the connection to communicate data, or
a measurement of congestion of a device implementing the one or more processors.

**13.** The system of claim 11 or 12, wherein the one or more processors are further configured to generate a plurality of resource limits, each resource limit corresponding to a respective type of data communication over the connection and a respective resource allocated to the respective type of data communication.

**14.** One or more non-transitory computer-readable storage media storing instructions that when executed by a network device comprising one or more processors, cause the one or more processors to perform operations comprising:

receiving a request for a connection between a source and a destination;
generating a resource limit for the connection, the resource limit based at least partially on free resource space for computing resources;
sending data over the connection between the source and the destination; and
determining that the connection exceeds the resource limit; and
causing the connection to pause when the connection exceeds the resource limit.

**15.** The one or more non-transitory computer-readable storage media of claim 14, wherein:

the one or more processors are part of a transport layer at least partially implemented in hardware;
the computing resources are accessible to the transport layer for sending data over the plurality of connections; and
the computing resources are at least partially oversubscribed.

FIG. 1

EP 4 651 459 A1

FIG. 2

300

Receive a request to send data along a connection between a source and a destination. — 310

Generate a resource limit for the connection. — 320

Send data along the connection between the source and the destination. — 330

Connection exceeds resource limit? — 340

NO

YES

Cause connection to temporarily pause. — 350

FIG. 3

FIG. 4

FIG. 5

Europäisches
Patentamt

European
Patent Office

Office européen
des brevets

# EUROPEAN SEARCH REPORT

**Application Number**

EP 25 17 6363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/125765 A1 (ARONOVICH LIOR [CA] ET AL) 27 April 2023 (2023-04-27) <br> * abstract * * <br> * paragraphs [0182], [0183], [0184] - [0186] * <br> * paragraph [0008]; claim 10 * <br> * paragraph [0101] * <br> * paragraphs [0099], [0106], [0137], [0139], [0147], [0163] - [0165] * <br> * paragraphs [0137], [0139] * <br> * claims 1-25 * <br> ----- | 1-15 | INV. <br> H04L45/00 |
| Y | JP 2022 176056 A (FUJITSU LTD) 25 November 2022 (2022-11-25) <br> * abstract * * <br> * paragraphs [0003] - [0005] * <br> * paragraphs [0016], [0018] - [0023] * <br> * paragraph [0122] * <br> * paragraph [0134] * <br> ----- | 1-15 | |

**TECHNICAL FIELDS
SEARCHED      (IPC)**

H04L

The present search report has been drawn up for all claims

| Place of search | Date of completion of the search | Examiner |
|---|---|---|
| The Hague | 26 August 2025 | Lai, Cristiana |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 6363

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2025

| Patent document cited in search report | Publication date | Patent family member(s) | Publication date |
|---|---|---|---|
| US 2023125765 A1 | 27-04-2023 | CN 116010020 A<br>JP 2023062698 A<br>US 2023125765 A1 | 25-04-2023<br>08-05-2023<br>27-04-2023 |
| JP 2022176056 A | 25-11-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63647876